# EUROPEAN PATENT APPLICATION

(11) **EP 2 584 447 A2**
(43) Date of publication of application: **24.04.2013**
(21) Application number: 12188846.5
(22) Date of filing: 17.10.2012
(51) Int. Cl.: G06F 3/0481, G06F 3/0482

(54) **Method and apparatus for operating menu screen of user device**

(30) Priority: 17.10.2011 KR 20110105751
(71) Applicant: Samsung Electronics Co., Ltd, Gyeonggi-do 443-742 (KR)
(72) Inventor: Park, Sehwan, Gyeonggi-do 443-742 (KR); Park, Youngjoo, Gyeonggi-do 443-742 (KR); Choi, Jinhee, Gyeonggi-do 443-742 (KR)
(74) Representative: Harrison Goddard Foote

(57) **Abstract**

A method for operating a menu screen in a user device is provided. The method includes activating a menu screen in response to a user's request; changing a state of an item of the menu screen according to a use log for each corresponding application when the menu screen is activated; and displaying the menu screen according to the state change of the item.

## Description

### BACKGROUND OF THE INVENTION

### 1. Field of the Invention

The present invention relates generally to a user device having a menu screen including various items, and more particularly, to a method and apparatus for operating a menu screen of a user device capable efficient use by simplifying the display of items within the menu screen by managing items on the menu screen in the user device according to conditions according to use setting.

### 2. Description of the Related Art

With the recent development of digital technologies, various user devices, which allow communication and personal information processing while moving, such as a mobile communication terminal, a Personal Digital Assistant (PDA), an electronic organizer, a smartphone, a tablet PC, and the like, are being introduced. Such user devices now have various functions including a video call, an electronic organizer, an e-mail transmission and reception, a broadcast replay, Internet access, a music replay, schedule planning, a Social Network Service (SNS), a messenger, a dictionary, a game, and the like, as well as a simple voice call and a text message as a result of rapid technology development. The above functions are installed at the time a user device is manufactured, or an application of a new function is downloaded through an application store and then be installed.

Further, applications of various functions, as mentioned above, can be registered as items such as icons or widgets on the menu screen of user device, and a user can execute an application by selecting an item. Recently, the number of applications which are supported in the user device, as well as user needs for such applications, have been increasing. As such, a number of items are being arranged on the menu screen of the user device based on the number of applications that are mounted (originally installed) or additionally installed. That is, as time passes, more and more application items are being listed on the menu screen of the user device.

Hence, when user tries to select an item for executing a predetermined application from the menu screen, check an item of an additionally installed application, or select an item for deleting a predetermined application, etc., it may take a long time to search for the item. That is, as the number of application items on a menu screen of the user device increases, it becomes more difficult for a user to find a desired item and execute the application.

### SUMMARY OF THE INVENTION

The present invention has been made in view of the above problems, and an object of the present invention is to provide a method and apparatus for operating a menu screen of a user device capable of supporting a more effective use of an application in a user device.

Another object of the present invention is to provide a method and apparatus for operating a menu screen of a user device, which can support a faster search and selection of an item for execution of an application on a menu screen of a user device.

Another object of the present invention is to provide a method and apparatus for operating a menu screen of a user device that displays items on a menu screen in a differentiated manner according to a predetermined condition based on a user setting.

Another object of the present invention is to provide a method and apparatus for providing a menu screen of a user device that identifies an application that has not been used for a predetermined period of time based on the use log of the application, and temporarily deletes the item for the identified application, thereby improving the ease of use of the menu screen by a user.

Another object of the present invention is to provide a method and apparatus for operating a menu screen of a user device, which differentiates the displayed method for items constituting the menu screen according to threshold times of multilevel, and automatically removes an item that reaches the final threshold time, from the menu screen, thereby saving space.

Another object of the present invention is to provide a method and apparatus for operating a menu screen of a user device, which identifies the position of a user device, and temporarily deletes an item for an unused item at the identified position, thereby improving the ease of use of the menu screen by a user.

Another object of the present invention is to provide a method and apparatus for operating a menu screen of a user device, which identifies time periods and days of the week divided according to a user's setting, and temporarily deletes an item for an application unused at the identified time period or day of the week from the menu screen, thereby improving the ease of use of the menu screen by a user.

Another object of the present invention is to provide a method and apparatus for operating a menu screen of a user device, which supports intuitive restoration of temporarily removed items from the menu screen, and automatically arranges the restored items to an area where the items were originally located.

In accordance with an aspect of the present invention, a method for operating a menu screen in a user device is provided. The method includes activating a menu screen in response to a user's request; changing a state of an item of the menu screen according to a use log for each corresponding application when the menu screen is activated; and displaying the menu screen according to the state change of the item

In accordance with another aspect of the present invention, a method for operating a menu screen in a user device is provided. The method includes managing a use log of applications; determining an occurrence of an event for a state change of items within the menu screen based on the use log of the applications; changing the state of items for at least one application that generates the event, if an occurrence of the event is sensed; and managing the state-changed items according to the event type, after changing the state of the item for the application

In accordance with another aspect of the present invention, a method for operating a menu screen in a user device is provided. The method includes activating the menu screen in response to a user request; determining whether there has been an occurrence of an event for changing the state of items within the menu screen according to a predetermined condition, when activating the menu screen; changing the state of the item for at least one application which generates the event, if the occurrence of the event is sensed; moving the state-changed item to a garbage area; and removing the state-changed item from the menu screen.

In accordance with another aspect of the present invention, there is provided a computer-readable recording medium on which a program for executing the method in a processor is recorded.

In accordance with another aspect of the present invention, a user device is provided. The device includes a display unit for displaying a garbage item, displaying items in different ways, and displaying a menu screen; a storage unit for storing log information including a use log for each application and setting information related to menu screen operation according to the application use log; and a controller for controlling the display of the menu screen by changing an item state of the menu screen according to the use log for each application, and displaying a menu screen according to a state change of the item when activating the menu screen.

### BRIEF DESCRIPTION OF THE DRAWINGS

The aspects, objects, features and advantages of the present invention will be more apparent from the following detailed description in conjunction with the accompanying drawings, in which:
FIG. 1 illustrates a block diagram of a user device according to an embodiment of the present invention;
FIG. 2 illustrates items of predetermined applications on a menu screen in a user device according to an embodiment of the present invention;
FIG. 3 illustrates a method of displaying items of a menu screen based on a use log according to an embodiment of the present invention;
FIG. 4 illustrates a method of restoring or removing items moved to a garbage area on a menu screen according to an embodiment of the present invention;
FIG. 5 illustrates a method of moving items of a menu screen based on a use log according to an embodiment of the present invention;
FIG. 6 illustrates a method of grouping items of a menu screen according to an embodiment of the present invention;
FIG. 7 is a flowchart illustrating a method of managing an application in a user device according to an embodiment of the present invention;
FIG. 8 illustrates an operation of a menu screen by event types in a user device according to an embodiment of the present invention;
FIG. 9 is a flowchart illustrating a method of operating a menu screen by application use logs in a user device according to an embodiment of the present invention; and
FIGS. 10 and 11 are flowcharts illustrating a method of operating a menu screen in a user device according to an embodiment of the present invention.

### DETAILED DESCRIPTION OF EMBODIMENTS OF THE PRESENT

### INVENTION

Embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subj ect matter of the present invention.

The present invention relates to a method and apparatus for operating a menu screen of a user device that shows items on a menu screen in a gradually differentiated manner by using use logs of the applications in a user device. According to an embodiment of the present invention, the items are shown differently in the menu screen according to the use frequency of applications installed in the user device. Further, if it is determined that an application has not been used for a predetermined period of time, the item of the application is moved to a garbage group so that the item is removed from the menu screen.

Further, according to an embodiment of the present invention, items of the menu screen are shown differently based on the location of the user device. For example, the location of the user device (e.g., a home, an office, an indoor location, and an outdoor location, etc.) is distinguished, and the items of unused applications are temporarily removed from the menu screen based on the current position of the user device. For example, applications used at home may be different than those used in the office. Thus, a user separately registers applications not used at home and applications not used in the office. In such a case, while staying at home, a user uses a menu screen from which items of applications related to work have been removed, and in the office, a user uses a menu screen from which applications used at home have been removed. Applications unused by use rankings in the user device are set according to user's definition.

Further, according to an embodiment of the present invention, items are shown differently on the menu screen based on the current time periods or days of the week. For example, current time periods (e.g., morning, afternoon, evening, and X time unit in which X is a natural number, a predetermined extended period of time (e.g., a vacation period and a season, etc.) or days of the week (e.g., weekday, weekend and each day of the week, etc.) are distinguished, and the items of unused applications are temporarily removed based on the current time period and the day of the week. For example, a user sets a vacation period, and it is possible to set applications related with work not to be used during a vacation period. In such a case, a user uses a menu screen from which items of applications related with the company work have been removed during the vacation period.

According to the present invention, it is possible to automatically rearrange items of the menu screen to include only applications desired to be used by user, thereby improving usability and space utilization of the menu screen.

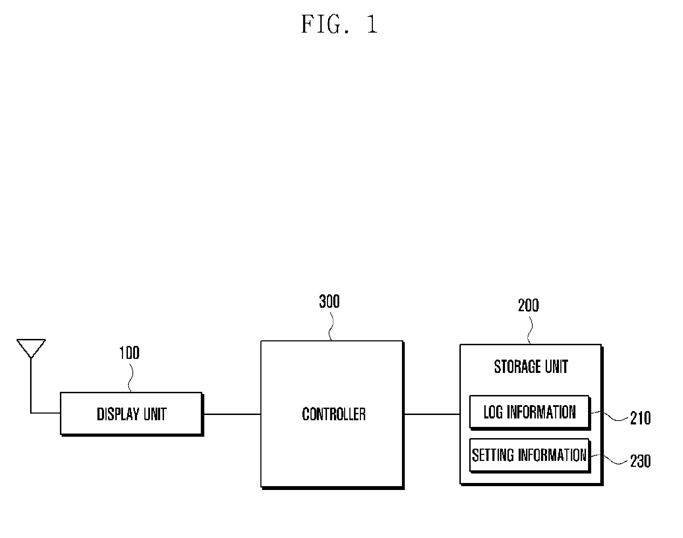

FIG. 1 illustrates a block diagram of a user device according to an embodiment of the present invention.

Referring to FIG. 1, a user device of the present invention comprises a display unit 100, a storage unit 200, and a controller 300. Further, the user device further includes an audio processing unit including a microphone and a speaker, a digital broadcast module for receiving a digital broadcast (e.g., a mobile broadcast such as Digital Multimedia Broadcasting (DMB) or Digital Video Broadcasting (DVB)), a camera module for taking a static image and a moving image of a subject, at least one short-distance communication module for supporting a communication function based on a short-distance wireless communication such as a Bluetooth® communication, Infrared Data Association (IrDA) communication, Radio Frequency IDentification (RFID) communication, and Near Field Communication (NFC), etc., an input unit for supporting an input based on a hard key, a Radio Frequency (RF) module for supporting a communication function such as a voice call, an image call and a data call based on a mobile communication, a communication module for supporting an Internet communication service based on the Internet Protocol (IP), a location information collection unit for collecting location information of a user device, and a battery for supplying power to the above components.

The display unit 100 displays a screen related with the operation state of the user device. For example, the display unit 100 displays the menu screen of the user device, or displays the execution screen of each of the executions of various applications. Further, in the present invention, a Liquid Crystal Display (LCD) is generally used for the display unit 100, but other display devices such as a Light Emitting Diode (LED), an Organic LED (OLED) and an Active Matrix OLED (AMOLED) are also used. Further, in the present invention, the display unit 100 further includes an interface for supporting a touch-based input. For example, the display unit 100 supports various touch-based user inputs by using a touchscreen, and generates an input signal according to a user input, thereby transmitting the generated input signal to the controller 300. Further, the display unit 100 supports a screen display by a horizontal mode, a screen display by a vertical mode, and an adaptive screen conversion display according to a change between the horizontal mode and the vertical mode, depending on the rotational direction (or the direction the display unit is facing) of the user device when displaying the above execution screen.

In particular, in the present invention, the display unit 100 gradually differentiates methods of showing items according to the use log of each application when displaying items of the menu screen. Further, the display unit 100 displays items of a predetermined number, which satisfy given conditions in the items of the menu screen, as a predetermined group (e.g., a garbage group). For example, the display unit 100 displays the garbage item in one area allocated as the garbage area of the menu screen when displaying the menu screen, and indicates the item of the application to be a garbage item based on the passage of a predetermined period of time. Such a screen arrangement of the display unit 100 will be described later.

The storage unit 200 stores various applications and data that are executed and processed in the user device, and is stored on at least one of a non-volatile memory and a volatile memory. In the present invention, the storage unit 200 is at least one of a Read Only Memory (ROM), a flash memory, a Random Access Memory (RAM), a Hard Disk Drive (HDD), an external HDD, a networked external storage medium, and the like. Further, the storage unit 200 continually or temporarily stores an operating system of the user device, a program and data related to the display control operation of the display unit 100, a program and data related with an input control operation using the display unit 100, a program and data related with the function operation of the user device, a program and data related with the extraction and storage of a use log about applications of the user device, a program and data related to the item management of the menu screen based on the use log of the application, a program and data related to the item management of the menu screen by used locations of the user device, a program and data related to the item management of the menu screen by used time periods of the user device, and a program and data related to the item management of the menu screen by the days of the week the user device is used, etc.

Further, in the present invention, the storage unit 200 stores log information 210 regarding the use log for each application, and setting information 230 related to the menu screen operation according to the application use log. The log information 210 is stored in an application state table, and the setting information 230 includes information on at least one threshold time for an event occurrence based on the use log of the application, information about the exposed method of the item based on the threshold time, and information regarding the processing method about the item of the application which has reached the final threshold time, etc. Further, the storage unit 200 stores mapping information of unused applications by used positions, used time periods, and used days of the week, etc.

The controller 300 controls the general operation of the user device. In particular, the controller 300 controls operation related to the operation of the item of the menu screen according to the use log for each application in the present invention. For example, the controller 300 records and manages the use log for each application, and manages the collected log information 210 in the form of a table. The controller 300 indicates the items of the menu screen using a different display method according to the application use log. The controller 300 divides the displayed level according to the multi-level threshold time, removes the items that have reached the final threshold time, from the corresponding area of the menu screen, by managing the items as a predetermined group (e.g., a garbage group), and the state information (indicated in the garbage group) is substituted and displayed. Further, the controller 300 moves and arranges items managed as a group in the original area by integrally or gradually restoring the items.

Further, with respect to an emptying type event, which finally moves items to the garbage area after a gradual differentiation (e.g., items progressively getting smaller) of items, the controller 300 controls an item resizing, movement to a garbage item, and a substitution to a function item. Further, with respect to a grouping-type event for managing items as a preliminary garbage group, the controller 300 controls the generation of a folder item in the menu screen, resizing the item and movement to the folder item, and movement of the items of the folder item to the garbage item.

Further, the controller 300 differentiates items of an application based on the passage of a predetermined period of time based on the use log of the application, and differentiates displayed items of the application according to their use ranking, the used time period and the used day of the week. For example, the controller 300 determines the position of the user device (e.g., a home, an office, an indoor area, an outdoor area, etc.), and temporarily removes items of the unused application from the menu screen based on the current position of the user device. In such a case, the position of items of the menu screen is changed whenever the position of the user device is changed (e.g., from a home to an office, and from an outdoor location to an indoor location, etc.). Further, in the present invention, the used position of the user device indicates a predetermined area designated by a user such as a home, an office, an indoor location and an outdoor location, etc. For example, the application used by user at home may be different from the application used in the office. In such a case, the controller 300 checks the location of the user device when the menu screen is activated, and in case the current location corresponds to the home area, the application mapped to the home is determined, and the items of the application are removed from the menu screen, and are moved to the garbage area. Further, the controller 300 checks the location of the user device when activating the menu screen, and if the current location corresponds to the office area, the controller determines the application mapped to the office, remove the items of the application from the menu screen and move the items to the garbage area. Applications not used in each used location of the user device are set according to the user definition.

Further, the controller 300 determines the current time period (e.g., morning, afternoon, evening, X time unit in which X is a natural number, and a predetermined period, etc.), and temporarily removes the items of the unused applications from the menu screen based on the current time period. In such a case, whenever the time period according to user's setting is changed (e.g., from morning (9:00 AM to 12:00 PM) to afternoon (12:00 PM to 18:00 PM), 3 hour unit, and a predetermined period (e.g., a vacation period and a season), etc.), the arrangement of items on the menu screen is changed. Further, in the present invention, the used time period of the user device is divided by predetermined time sections based on a user's definition, and set in various ways. For example, a user may set a vacation period, and register applications related with the company work as unused applications for the vacation period. In such a case, when the menu screen is activated, the controller 300 checks the time period and if the time period is a part of the vacation period, the controller determines applications mapped during the vacation period, remove the items of the applications from the menu screen, and move the items to the garbage area.

Further, when the menu screen is activated, the controller 300 determines the current day of the week (e.g., weekday, weekend, and each day of the week, etc.), and temporarily removes the items of the unused applications from the menu screen based on the day of the week of the user device. In such a case, whenever the day of the week according to user's setting is changed (e.g., from weekday to weekend, Monday to Tuesday, etc.), the item arrangement of the menu screen is changed. Further, in the present invention, the day of the week of the user device is determined by predetermined day-of-the-week sections according to a user's definition, and set in various ways.

Likewise, the controller 300 controls item management (displayed method and temporary removal, etc.) of the menu screen by using logs of the applications, the locations of the device in which the applications were used and the days of the week the applications were used.

In particular, when activating the menu screen in response to a user's request, the controller 300 determines whether an event triggering the status change of the items in the menu screen has occurred according to predetermined conditions. In the present invention, the above conditions determine whether an event has occurred, and include the conditions by the use logs of the application, conditions by the used locations of the user device, conditions by the used time periods of the user device, and used days-of-the-week conditions, etc.

As such, when activating the menu screen, the controller 300 collects the use logs of applications, determines the existence of the unused applications for a predetermined period of time based on the use log of the collected applications, and determines that the event has occurred if there is an application that has not been used.

Further, when activating the menu screen, in the case that a predetermined condition is a condition of the user device by use locations, the controller 300 checks the current position of the user device when activating the menu screen, determines the existence of the application mapped to the current position when activating the menu screen, and determines that the event has occurred if there is an application mapped to the current position.

Further, when activating the menu screen, in the case that a predetermined condition is a condition of the user device by used time periods, the controller 300 checks the current time period of the user device, determines the existence of the application mapped to the current time period, and determines that the event has occurred if there is an application mapped to the current time period.

Further, when activating the menu screen, in the case in which a predetermined condition is a condition of the user device for each day of the week the user device is used, the controller 300 checks the current day of the week of the user device when activating the menu screen, determines the existence of the application mapped to the current day of the week, and determines that the event has occurred - if there is an application mapped to the current day of the week.

That is, the controller 300 determines whether there is at least one application unused for a predetermined period of time based on the use log, determines whether there is an application mapped to the current position of the user device, determines whether there is an application mapped to the current time period of the user device, and determines whether determination of existence of an application mapped to the current day of the week of the user device, and as a result of the determination, if there is an application which meets the condition, it is determined that the event has occurred.

Further, if an occurrence of an event is sensed based on a condition, as described above, the status of the item for at least one corresponding application, which generates an event, is changed, and the status-changed items are moved to the garbage area, thus being removed from the menu screen. The items removed from the menu screen are temporarily removed, and as stated above, the items are resized to a predetermined size and are moved to the garbage item. Further, the removed items are restored in the menu screen according to user's selection.

Likewise, the controller 300 controls the general operation of the present invention, which will be explained in the operation example of the user device and the control method with reference to the drawings with respect to the detailed control operation of the controller 300.

Further, the controller 300 controls various operations related to the general function of the user device in addition to the function. For example, when executing a predetermined application, the controller 300 controls the operation of the application and the screen display. Further, the controller 300 controls the function operation related to the collection of the position, current time, and current day of the week, etc. of the device. Further, the controller 300 receives an input signal corresponding to various touch event inputs that are supported in the touch-based input interface, and control function operation according thereto. Further, the controller 300 controls the transmission and reception of various data based on the wired or wireless communication.

Further, the user device of the present invention, which is shown in FIG. 1, includes all information communication devices, multimedia devices and application devices thereof. For example, the user device includes a tablet personal computer, a smartphone, a digital Portable Multimedia Player (PMP), a media player, a portable game terminal, a laptop computer and a Personal Digital Assistant (PDA), etc. as well as a mobile communication terminal operated according to each of the communication protocols. Further, the method of controlling the function of the present invention can be applied to various display devices such as a digital TV, a Digital Signage (DS), a Large Format Display (LFD) and a laptop computer, etc.

Further, in the description below, an operation in which a condition that uses use logs will be explained. However, the present invention should be understood as applicable to all specific conditions (e.g., position, time period and day of the week, etc.) that can be implemented for the function control for managing items of the menu screen in the user device. Therefore, in an embodiment of the present invention, the description and explanation thereof have been omitted, but it is possible for the operations according to the conditions of use logs, which will be described below, to be operated in conditions of location of the user device, by the time periods of the user device, and by the days of the week of the user device, etc.

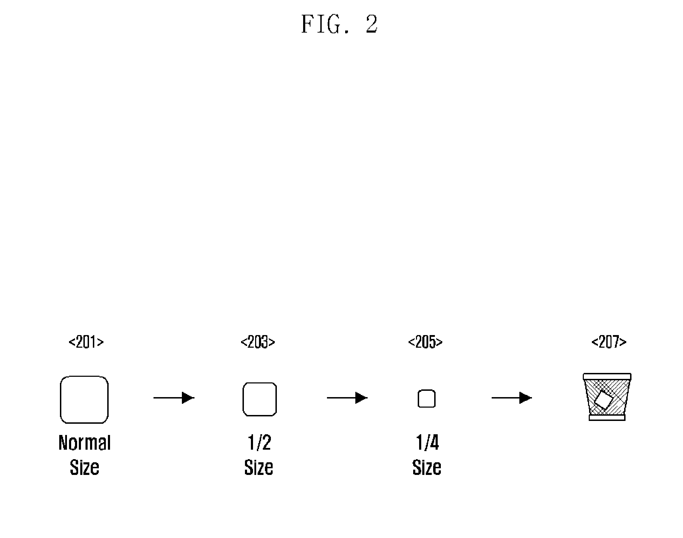

FIG. 2 illustrates items of predetermined applications on a menu screen in a user device according to an embodiment of the present invention.

As illustrated in FIG. 2, FIG. 2 shows the displayed items of the application according to the use log of a predetermined application (e.g., a use frequency and whether an application is used), and in the case the application is not used for a predetermined period of time, the items of the application will be moved to the garbage area, and will then be removed from the menu screen.

Referring to FIG. 2, item 201 shows an example of a case in which items of a predetermined application are initially provided. For example, when the predetermined application is installed, an example of an initial item, which is provided according to a predefined size (e.g., a normal state), is shown.

Next, in the case in which the predetermined application is not used for a predetermined first threshold time (Th1) in the state as item 201, that is, a use log is not generated, the item of the normal state is resized to the size according to the passage of the first threshold time (e.g., a half state - 1/2 of the original size). Further, in the state as shown in item 203, if the use log of the application corresponding to the item is updated, the item of the half state is changed to the normal state as shown in item 201, and the use log for the application is recounted.

In the state as shown in item 203, if the predetermined application is not used for a predetermined second threshold time (Th2) period, that is, a use log is not generated, the item of the half state is resized to the size according to the passage of the second threshold time (e.g., mini-state, 1/4 of the original size), as shown in item 205. Further, as shown in item 205, if a use log of an application corresponding to the item is updated, the item in the mini-state is changed to the normal state as shown in item 201, and the use log for the application is recounted.

Next, in the state as shown in item 205, if the predetermined application is not used for a predetermined third threshold time (Th3) period, that is, a use log is not generated, the item at the mini-state is moved to the garbage (e.g., a trashcan item) and is then removed from the menu and managed as a garbage group as illustrated in group 207.

That is, as illustrated in FIG. 2, if the application is not used for the third threshold time period, the items of the applications are gradually reduced, and if the third threshold time is passed, the items of the application are moved into the garbage area to be managed as a garbage group. As illustrated in item 205, when the items are moved to the garbage area, the shape and color of icons are changed so that it is recognized that the items have been moved to the garbage area.

Further, in the present invention, the first threshold time, the second threshold time and the third threshold time are predefined at the time of manufacturing of the user device, or set by a user. In FIG. 2, the first threshold time is prior to the second threshold time, which is prior to third threshold time. Further, in FIG. 2, three threshold times are used, however, threshold times less or more than three can be used. The relation between the threshold times and use logs of the application will be considered below.

Table 1 below illustrates an application state table (Application_State_Table) for checking the use log of each of the applications. Such a state table is stored in the storage unit 200 as log information 210.

**Table 1**

| Application ID | No. of Executions | Final Execution Date | Installation Date | State Normal/Half/Mini /Invisible |
|---|---|---|---|---|
| 1 | 5 | 201106141023 | 201102101313 | Normal |
| 2 | 10 | 201106180345 | 201102101023 | Normal |
| 3 | 1 | 201106140910 | 201106140855 | Mini |
| 4 | 1 | 201107011900 | 201107011820 | Half |
| 5 | 1 | 201103221310 | 201103221250 | Invisible |
| .. | . | .. | .... | .... |

As shown in Table 1 above, log information such as the number of executions, the final execution date, the installation date and current state for the item of the application are continually determined and stored. Thus, a user device checks the use log for each application with reference to the application state table like Table 1, and the items are displayed in different ways by determining the use log and one threshold time or multilevel threshold time. The example of the threshold time defined in the present invention is shown in Table 2 below.

**Table 2**

| Threshold Time | State |
|---|---|
| Installation Date/Used days - 2 weeks | Normal |
| Installation Date/Used days 2 weeks passed - 4 weeks | Half (1/2) |
| Installation Date/Used days 4 weeks passed - 8 weeks | Min (1/4) |
| Installation Date/Used days 8 weeks passed | Invisible (Move) |

As shown in Table 2 above, it is possible to determine how to display items by use logs of the application by the multilevel threshold time. For example, it is possible to set the range from the installation date (or used date) to 2 weeks as a first threshold time and set the display method of the item within that range to Normal. Further, the range from the time after 2 weeks from the installation date (or used date) to the 4^{th} week is set as the second threshold time and the display method of the item within the range is set to Half. Further, the range from the time after 4 weeks from the installation date (or used date) to the 8^{th} week is set to the third threshold time and the display method of the items within the range are set to Mini. It is assumed that the third threshold time is the final threshold time. Thus, when 8 weeks pass from the installation date (or used date), that is, the third threshold time, which is the final threshold time, passes, the display method of the items is set to Invisible, and the items are set to be moved to the garbage area.

The use log for applications as in Table 1 above is checked, and the use log is compared with the multilevel threshold time that is set as in Table 2 above. Further, the display method of items for each application is based on the threshold time corresponding to the use log of each application. For example, in a predetermined application, even if not used, the item is displayed in Normal size from the installation date (or used date) to 2 weeks, and the item is displayed in Half size (e.g., 1/2 of Normal size) from the time after 2 weeks, the item is resized to Mini-size (e.g., 1/4 of Normal size) from the time after 4 weeks, and the item is moved to the garbage area (e.g., a trashcan item) to be managed as a garbage group from the time after 8 weeks.

Further, it Table 2 illustrates an example of multilevel threshold times, but in the present invention, one or more threshold times of different durations are used, and defined by a user. Moreover, in the present invention, the threshold time is set in various units such as time unit, day unit, week unit, month unit and year unit, etc.

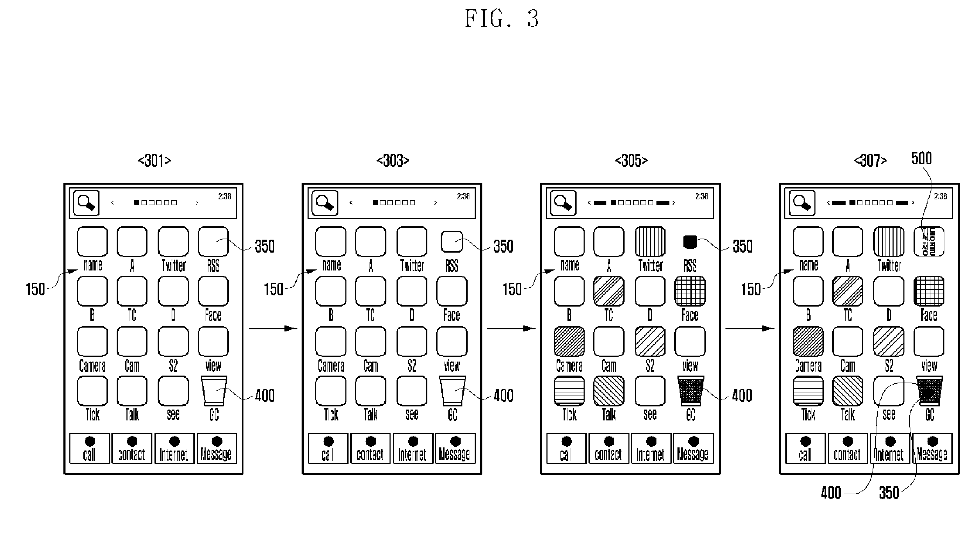

FIG. 3 illustrates a method of displaying items of a menu screen according to a use log according to an embodiment of the present invention.

Referring to FIG. 3, as illustrated in screen 301, it is assumed that 15 items are provided through the menu screen 150. In the present invention, it is assumed that a total of 15 applications are installed and used in screen 301. As such, there is a total of 15 items corresponding to each application. Further, in the present invention, one area of the menu screen 150 is allocated as a garbage area, and one garbage item 400 (e.g., a trashcan item) is provided in the garbage area for intuitiveness thereof. That is, in the present invention, the items of the application unused for a predetermined period of time are moved to the garbage area, and the garbage item 400 is included in one area of the menu screen 150 in order to provide the ease of use of the items automatically moved to and managed in the garbage area.

Further, as shown in reference numeral 301, when a user enters the menu screen 150, the user device extracts log information for the above 15 applications which are installed, and check the use logs for each application based on the log information 210. Further, when activating the menu screen 150, the user device determines the displayed size of the items thereof and moves predetermined items to the garbage area based on use logs of each application, and updates the screen accordingly. As in Table 2, in reference numeral 301, all applications belong to the first threshold time range, and the items of each application are provided in Normal size.

Next, in the state as in screen 301, it is assumed that threshold time passes by, and the application corresponding to the time of item 350 passes by the first threshold time and is in the second threshold time range according to Table 2. In such a case, as illustrated in screen 303, in menu screen 150, it is possible for the item 350 of the application, which is in the second threshold time range, to be resized from Normal size to Half size.

Next, in the state as shown in screen 303, it is possible that the application corresponding to the item of item 350 passes the second threshold time, and a use log update is not performed during the third threshold time range. Then as illustrated in item 350, in the menu screen 150, the item 350 of the application, which is in the third threshold time range, is resized from Half size to Mini size.

Next, in the state as in screen 305, if the use log of the application corresponding to the item of item 350 is not updated until the third threshold time passes, the item 350 is moved to the garbage item 400 of the garbage area in the menu screen 150 as shown in screen 307. That is, as illustrated in screen 307, the item 350 is moved to the garbage item 400, and the area where item 350 was displayed previously becomes empty.

In the present invention, the area that becomes empty based on the movement of the item 350 to make item management of the menu screen 150 simpler is substituted by a predetermined function item 500. That is, when item 350 is moved to the garbage item 400, the area is substituted by the function item 500. In the present invention, the function item 500 is an item of a function for automatically arranging the items within the menu screen 150, or an item of a function for restoring the item of the area that was moved to the garbage item 400.

For example, when the function item 500 is an item providing an automatic arrangement function, a user performs an automatic arrangement function that fills the space generated based on the movement to the garbage item 400 of the item 350 by selecting the function item 500. When an automatic arrangement function is performed by the function item 500, the function item 500 is removed from the menu screen 150. Further, in the present invention, even if the automatic arrangement function is performed, the garbage item 400 is not moved. Further, when the function item 500 is provided as an item with a restoration function, by selecting the function item 500, a user performs the function of restoring the item 350, which has been moved to the garbage item, in the area, and removing the item 350 from the garbage item 400.

Further, in the present invention, in order to distinguish the garbage item 400 and the function item 500 from the items of general applications, the garbage item 500 is provided as an intuitive item like an image of a trashcan, and the function item 400 is displayed in a semitransparent form.

Further, in the embodiment of the present invention, when an item is moved from the menu screen 150 to the garbage item 400, an automatic arrangement function is executed. In such a case, the display of the function item 500 is omitted.

If at least one application is not used for a predetermined period of time, that is, a use log is not generated, the icon of the application is displayed to a user in a gradually diminishing manner on the menu screen 150, and if a predetermined threshold time (e.g., the final threshold time) passes, the item of the application is moved to the garbage area and is then managed as a garbage group. In order to provide a user's recognition on which application is being managed as a garbage group, the garbage item is provided in the garbage area, and state information is provided through the icon and color for the item moved to the garbage item 400, thereby making it easier for the user to manage the garbage area.

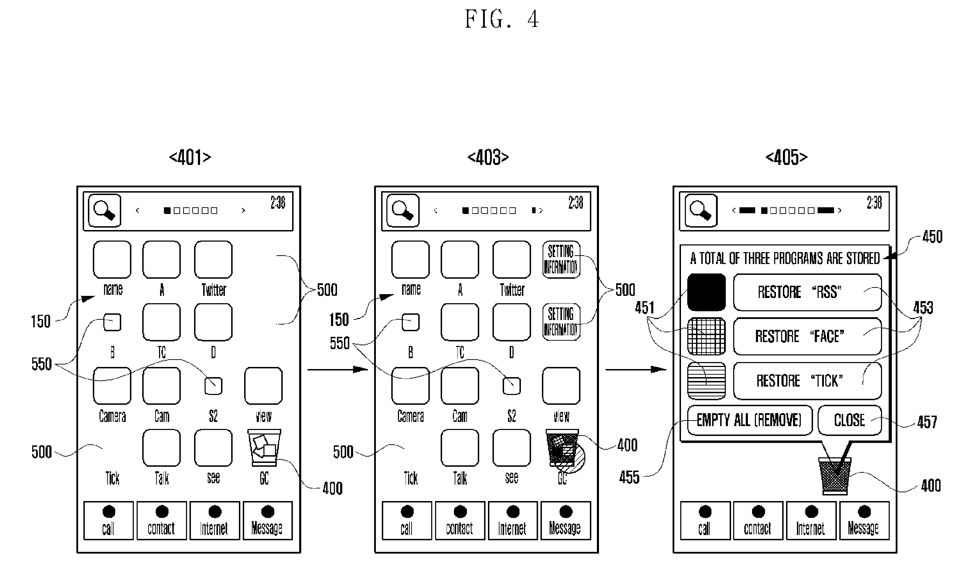

FIG. 4 illustrates an operation of restoring or removing items moved to a garbage area on a menu screen according to an embodiment of the present invention.

Referring to FIG. 4, FIG. 4 illustrates a menu screen 150, including each of the items representing 15 applications, and one garbage item 400. As illustrated in reference numeral 401, it is assumed that the use logs of three of a total of 15 applications have not been updated for a predetermined period of time (e.g., the passage of a third threshold time), and the items of the three applications are moved to the garbage area and are displayed through the garbage item 400.

Therefore, as illustrated in screen 401, the items 500 of predetermined functions are displayed in areas where the items of the three previous applications were displayed. Further, as shown in items 550, the use logs of two applications are not updated for a predetermined period of time (e.g., the passage of the first threshold time), and the items 550 of the three applications are displayed in a form that is smaller than other items.

Next, in the state as shown in screen 401, a user selects items registered in the garbage item 400 (e.g., for restoration of items or deletion of applications of the items, etc.). For example, as illustrated in screen 403, a user selects the garbage item 400. Then, in response to the selection of the garbage item 400, a user device provides items that have been moved to and managed in the garbage area, on a pop-up window 405 as shown in screen 405.

The pop-up window 450 is provided in the form of a "speech bubble" by connecting with the garbage item 400 as shown in screen 405. Further, the pop-up window 450 includes an item of an application, which is moved to and managed in the garbage area, a restoration function item 453 for restoration of the items 451, a deletion function item 455 for deleting all applications of the items which have been moved and managed in the garbage area, and a close function item 457 for closing the pop-up window 450. Additionally, the pop-up window 450 further includes a deletion function item for the selective deletion of the items 451, and a restoration function item to restore items 451.

As illustrated in screen 405, a user performs restoration and deletion for an application that is being managed in the garbage area through the selection of a predetermined function item in the pop-up window 450. For example, when a restoration function for at least one item 451 is performed through the pop-up window 450, at least one item 451 according to user's selection is removed from the garbage item 400, and is moved to the original area of the menu screen 150 (or a predetermined area like the bottom area after execution of the automatic arrangement function). Moreover, when a user performs a deletion function for at least one item 451 through the pop-up window 450, the application corresponding to at least one item 451 according to user's selection is removed (e.g., uninstalled) from the user device, and the item is removed from the garbage item 400.

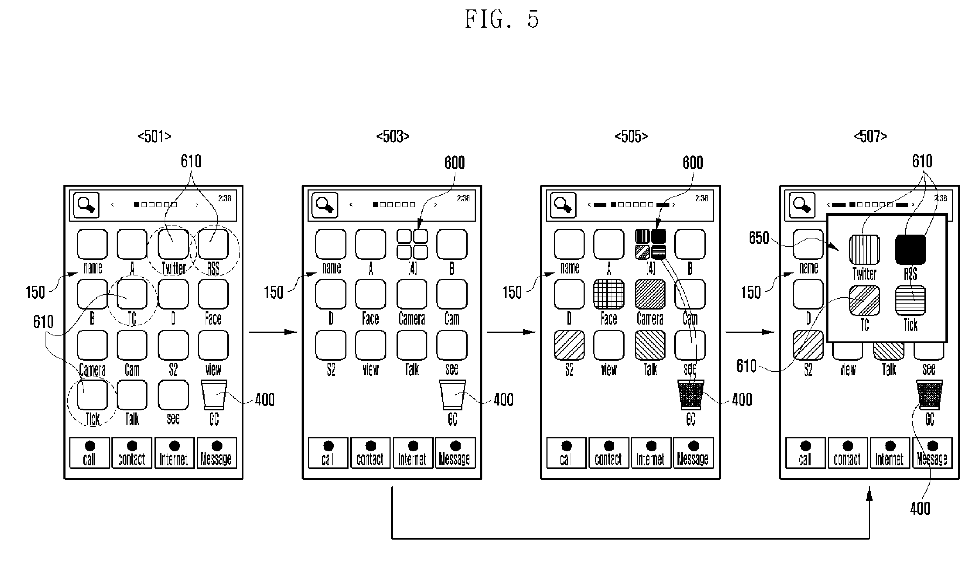

FIG. 5 illustrates operating items of a menu screen based on a use log according to an embodiment of the present invention.

FIG. 5 illustrates a case in which a menu screen 150 that includes 15 items for a total of 15 applications, and one garbage item 400, as shown in screen 501. Further, FIG. 5 illustrates a case in which two threshold times including threshold time A and threshold time B (where threshold time A is earlier than threshold time B), but it is possible operate by setting three or more threshold times. Further, in FIG. 5, it is assumed that use logs of 4 of a total of 15 applications have not been updated for a predetermined period of time (e.g., the passage of threshold time A).

Thus, in the state as shown in screen 501, if the use logs of the 4 applications have not been updated for a predetermined period of time (e.g., the passage of threshold time A), the change of the displayed items 610 corresponding to the 4 applications is determined. In such a case, as illustrated in screen 503, 4 items 610 corresponding to the 4 applications are grouped and managed as one group (e.g., a preliminary garbage group). That is, 4 items 610 corresponding to the 4 applications are removed from the menu screen 150, the folder item 600 including the 4 items are generated and displayed in one item area (e.g., the item area on the uppermost line). The folder item 600 is provided as an icon of a form divided into 4 parts according to the number of the four items. Further, when the 4 items are moved, the automatic arrangement function is executed, and the items are rearranged.

Next, in the state as shown in screen 503, the use log of the application corresponding to at least one item among 4 items managed as the preliminary garbage group has not been updated until threshold time B passes by. Then, as illustrated in screen 505, at least one item in the folder item is moved to the garbage item 400 of the garbage area. In such a case, at least one item is removed from the folder item, and at least one item is shown in the garbage item 400. Further, in the state as in screen 503, when the use log for the application of at least one item is updated among four items 610 managed as the preliminary garbage group, the item for the application is removed from the preliminary garbage group. In such a case, at least one item is removed from the folder item 600 of reference numeral 503, and is restored to the original position.

Further, in the state as shown in screen 503, a user selects items 610 registered in the folder item 600 (e.g., for confirmation or restoration) of items 610 which have been managed as one group and have been moved to the folder item 600. For example, in the state as in screen 503, a user inputs an interaction that selects the folder item 600. Then, in response to the selection of the folder item 600, as illustrated in screen 507, the user device provides items that are managed as the preliminary group, in the form of a pop-up window 650.

Further, although not illustrated in FIG. 5, a user executes an application through a predetermined item selection in a given pop-up window 650 as shown in screen 507, or input an interaction that moves to the menu screen 150. Then, the item, which has been moved from the pop-up window 650 to the menu screen 150, is removed from the pop-up window based on the item selected for the application execution or movement interaction, and the item is moved to the original area to be restored in the menu screen 150.

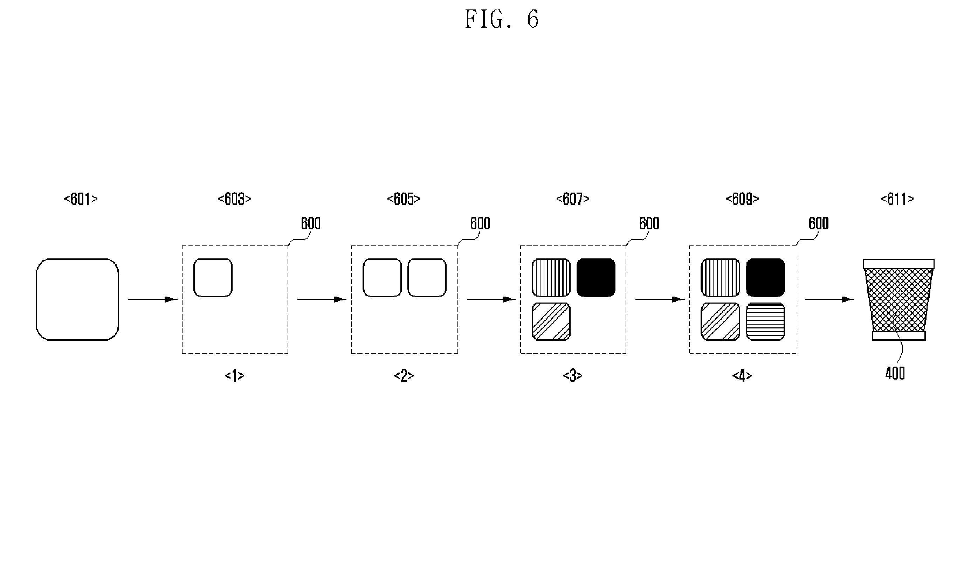

FIG. 6 illustrates an operation of grouping items of a menu screen according to an embodiment of the present invention.

FIG. 6 illustrates an operation of grouping items of the menu screen 150 and managing the items as one group, and moving the items of the application to the garbage area if the application corresponding to the items within the group is not used for a predetermined period time, the items of the corresponding application are moved to the garbage area.

Referring to FIG. 6, screen 601 shows an a case in which the item of a predetermined application is initially provided. For example, an initial item, which is displayed in a predetermined state (e.g., Normal state) at the time of installing the predetermined application, is shown. There is a plurality of such items as illustrated in FIG. 5.

Next, in the state as in reference numeral 501, if the predetermined application is not used for a predetermined threshold time A, that is, if a grouping event is generated as the use log is not updated, a folder item 600 according to the grouping event is generated as shown in screen 603. Further, the item of the application according to the grouping event is resized to the size based on the passage of threshold time A (e.g., Mini size), and the resized item is moved to the folder item 600. As illustrated in reference numeral 603, the numerical information (e.g., <1>) about the number of items, which are managed as a preliminary garbage group by the folder item 600 is displayed in the surrounding area (e.g., lower area) of the folder item.

Next, a grouping event according to threshold time A is generated for other applications in addition to the predetermined application. In such a case, as illustrated in screen 605 to 609, the items corresponding to the applications are resized to the size according to the passage of threshold time A (e.g., Mini state), and are then sequentially moved to the folder item 600. As illustrated in screens 605 to 607, the numerical information (e.g., <2>, <3> and <4>) for the number of items managed as the preliminary garbage group by the folder item 600 is sequentially shown in the surrounding area (e.g., the lower area) of the folder item 600.

Next, in the state as shown in screens 601 to 609, in case at least one application managed as a preliminary garbage group by the folder item 600 is not used for predetermined threshold time B, that is, an emptying event is generated as the use log is not updated, the item corresponding to the application is moved to the garbage item 400 as illustrated in reference numeral 611. Screen 611 illustrates a case in which one item is moved, but as in screen 609, four items are collectively moved to the garbage item 400 according to the use log of applications corresponding to four items, and in such a case, the folder item 600 is removed from the menu screen 150.

Further, FIG. 6 illustrates that the number of items, which are moved to the folder item 600 and are managed as a preliminary garbage group, is 4 (but the number can be any number which is greater than or equal to 2) and an appropriate number are determined considering ease of use based on the size of the display 100. Further, although not illustrated in FIG. 6, in the state in which the maximum number of items managed as a preliminary garbage group by the folder item 600 is 4 and all of the four items have been moved to the folder item 600, if a grouping event for a new application according to threshold time A occurs, a new folder item 600 according thereto is additionally generated, and the above operation is performed. That is, according to the present invention, the operation of a plurality of folder items 600 is supported.

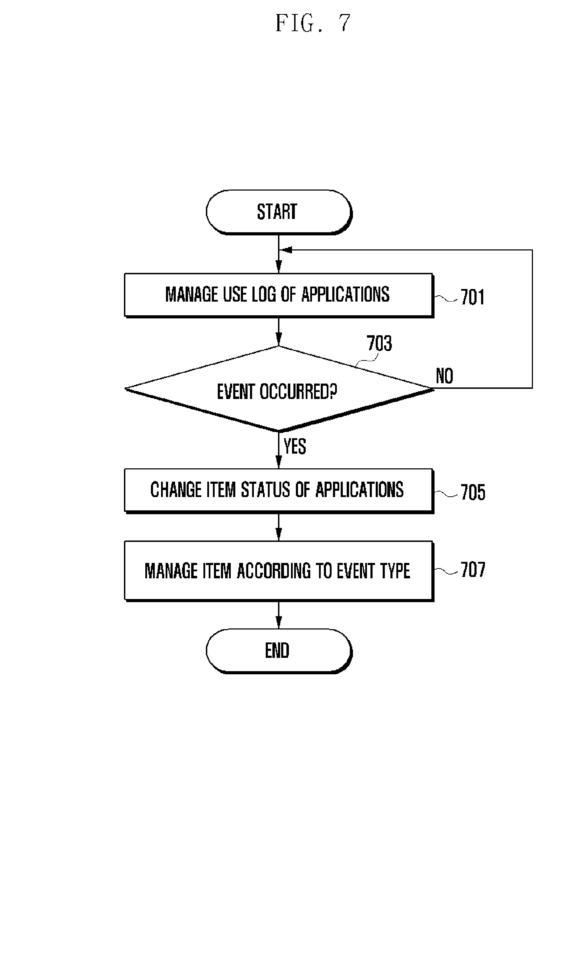

FIG. 7 is a flowchart illustrating a method of managing an application in a user device according to an embodiment of the present invention.

Referring to FIG. 7, the controller 300 of the user device manages the use log of applications in step 701. For example, the installation date, the last used date and the number of executions for each installed application are checked and compared with one or more predetermined threshold times.

Next, the controller 300 determines whether an event indicating a status change of the item of the menu screen has occurred among applications in step 703. For example, in the case there is one predetermined threshold time, it is checked whether there is an application where a use log has not been generated for the threshold time among applications. Further, in case there are multiple predetermined threshold times, the use log is checked by the multilevel threshold times among applications, and the event occurrence is checked.

Next, if an event has not occurred, the controller 300 continues to manage the use log for each application by moving to the above step 701. However, if an event occurrence is sensed, the controller 300 changes the state of the item for at least one corresponding application in step 705. For example, the controller 300 changes the state of the item from Normal to Half, from Half to Mini, and from Mini to Invisible, etc. based on the event generation phase by applications.

Next, the controller 300 changes the state of the item for the application, and then manage the state-changed item according to the event type in step 707. For example, in case an event type is an emptying event type of gradually differentiating items and finally moving to the garbage area as illustrated in FIGS. 2 to 4, the controller 300 controls the resizing of the item in the menu screen, movement to the garbage item 400 and substitution by the function item 500, and the like. Further, in case an event type is a grouping event type for managing items as a preliminary garbage group as illustrated in FIGS. 5 and 6, the folder item is generated in the menu screen, the item is resized in the menu screen and moved to the folder item 600, and the item of the folder item 600 is moved to the garbage item 400.

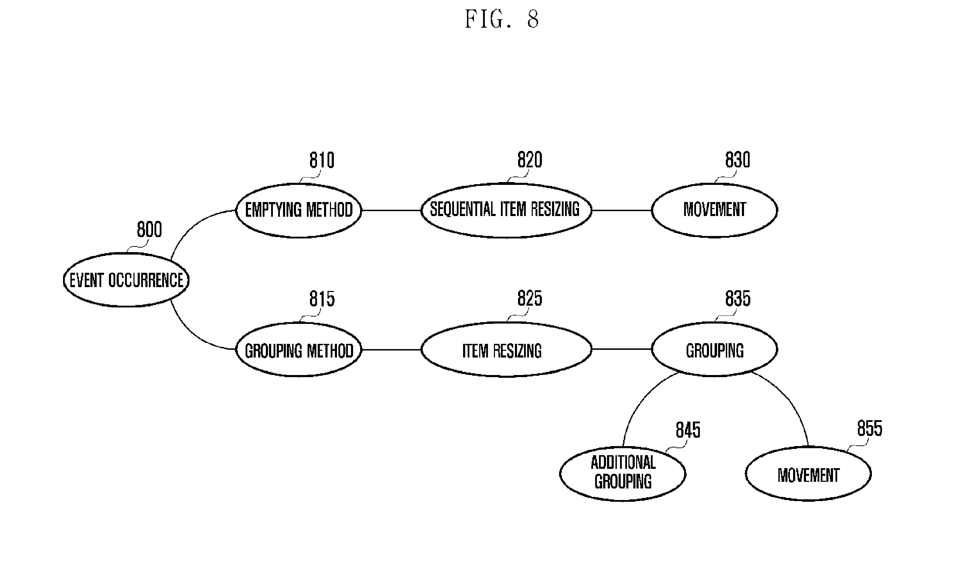

FIG. 8 illustrates an operation of a menu screen by event types in a user device according to an embodiment of the present invention.

Referring to FIG. 8, when an event occurrence for the state change of the item is sensed in the menu screen, the controller 300 determines a processing method that is set for the corresponding event in step 800. For example, the controller 300 determines whether the method of changing the item state corresponding to the generated event is an emptying method as considered in FIGS. 2 to 4, or a grouping method as considered in FIGS. 5 and 6 according to the setting information.

Next, in case an event processing method is an emptying method in step 810, the controller 300 gradually resizes the items based on the use log of each application and differentiate the exposed method of the items in step 820. Further, as shown in step 830, the controller 300 moves the item of the application, which has reached the final threshold time, to the garbage item 400 of the item, and removes the item from the menu screen. When the item is removed from the menu screen as the item is moved to the garbage item 400, the area of the item is substituted with the function item 500, or the menu screen is reconstituted by the automatic arrangement by the controller 300.

Next, in case a processing method for an event is a grouping method in step 815, the controller 300 resizes the items according to the use log of each application in step 825. Further, the controller 300 groups the resized items as a preliminary garbage group up to the predetermined maximum number, and indicates the group through the folder item 600 in step 835. The items, which exceed the maximum allowed number when grouping, are grouped as another preliminary group and indicated through another folder item 600 in step 845. According to the present invention, the items are grouped according to the maximum allowed number, which are grouped as a preliminary garbage group, and the additional items are managed as a new preliminary garbage group. That is, according to the present invention, the operation of a plurality of preliminary garbage groups and a plurality of folder items thereof are supported. Further, the items of applications, which have reached the final threshold time, are moved from the folder item 600 to the garbage item 400, and are removed from the folder item 600 in step 855.

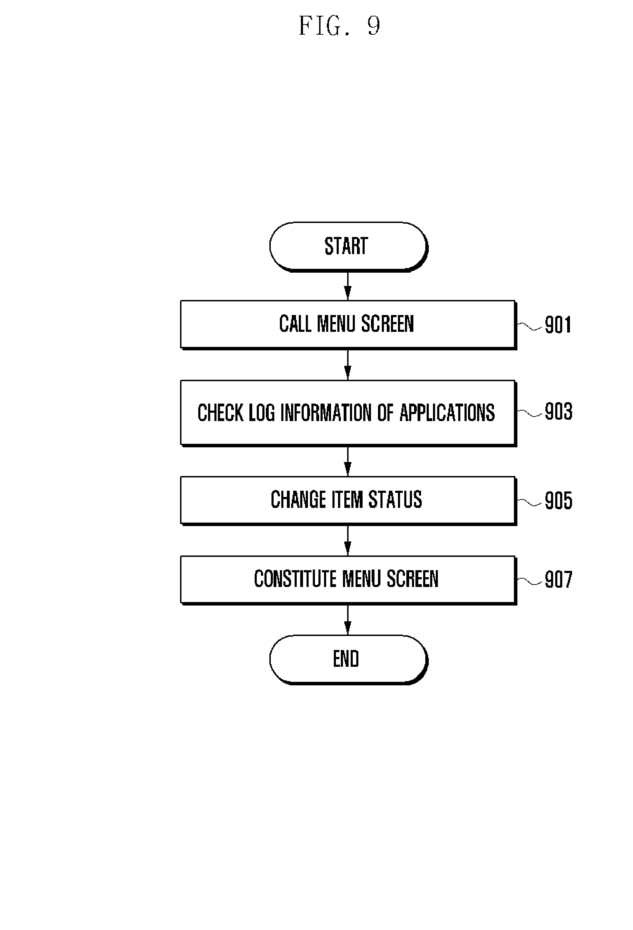

FIG. 9 is a flowchart illustrating a method of operating a menu screen by application use logs in a user device according to an embodiment of the present invention.

Referring to FIG. 9, the controller 300 senses a menu screen call from user in step 801. For example, a user operates a user device for entrance to the menu screen and the display.

Next, the controller 300 checks the log information for the applications when sensing the menu screen call in step 803. That is, the controller 300 extracts log information for installed applications, and checks use logs for applications with reference to the application state table of the extracted log information.

Next, the controller 300 determines the state of the items for each application of the menu screen according to the checked log information in step 805. For example, the controller 300 determines in which size the items of each application will be displayed and whether the items should be moved to the garbage item 400 or the folder item 600 based on the log information.

Next, when determining the state of the items, the controller 300 constitutes the menu screen based on the log information, and displays the menu screen as in the screen example of FIGS. 2 to 6.

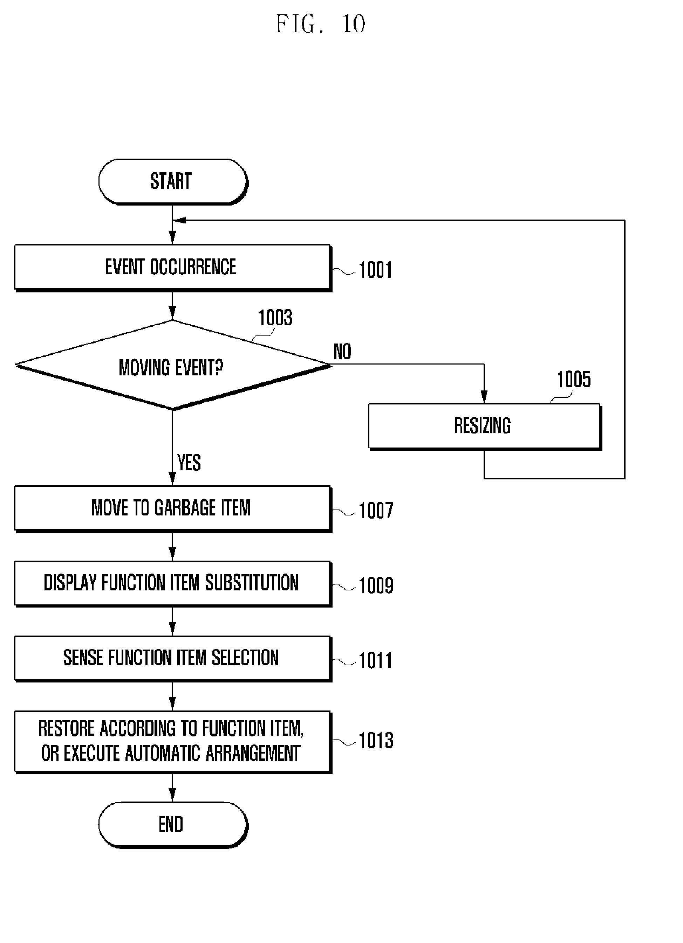

FIG. 10 is a flowchart illustrating a method of operating a menu screen in a user device according to an embodiment of the present invention. In particular, FIG. 10 illustrates an operation of using a function item 500 in an operation method of a case in which an event type is an emptying method as considered above.

Referring to FIG. 10, the controller 300 senses an event occurrence for the status change of the items within the menu screen in step 1001. For example, the controller 300 senses the status change for the items of at least one application according to a predetermined threshold time while checking the use logs of the applications. In FIG. 10, it is assumed that the event is an emptying event type.

Next, when sensing an event occurrence, the controller 300 determines whether the event corresponds to a movement event or a resizing event of an item in step 1003. For example, the controller 300 distinguishes which range (movement or resizing) the status change of items based on the event belongs to by comparing the use log of the application with at least one predefined threshold time.

Next, if the event is not a movement event (NO at step 1003), that is, the event corresponds to a resizing event, the controller 300 resizes the item corresponding to the application to a size predetermined for the threshold time in step 1005. Here, though not illustrated in FIG. 10, when the use log of the application corresponding to the resized item is updated, the item is restored to the original size.

Next, if the event corresponds to a movement event (YES at step 1003), the controller 300 moves the item from the menu screen to the garbage item 400 in step 1007. Further, when moving the item to the garbage item 400, the controller 300 controls the area, where the item has been positioned, to be substituted with the function item 500 in step 1009.

Next, when sensing a user selection for the function item 500 in step 1011, the controller 300 restores or automatically arranges the items according to the type of the function item 500 in step 1013. For example, in case the function item is an item of a restoration function, the controller 300 extracts items, which have existed in the area where a user's function item is selected, from the garbage item 400, and the extracted items is restored in the area. In such a case, the items extracted from the garbage item are removed. Further, in case the function item 500 is an item of an automatic arrangement function, the controller 300 rearranges the items within the menu screen based on the user's selection of the function item 500. The function item 500 is removed from the menu screen, and the items are sequentially shifted to the space to be rearranged.

Further, though not illustrated in FIG. 10, when sensing a user's selection of the garbage item 400, the controller 300 outputs a pop-up window 450, and controls the restoration of items within the garbage item 400 and deletion of the applications, etc.

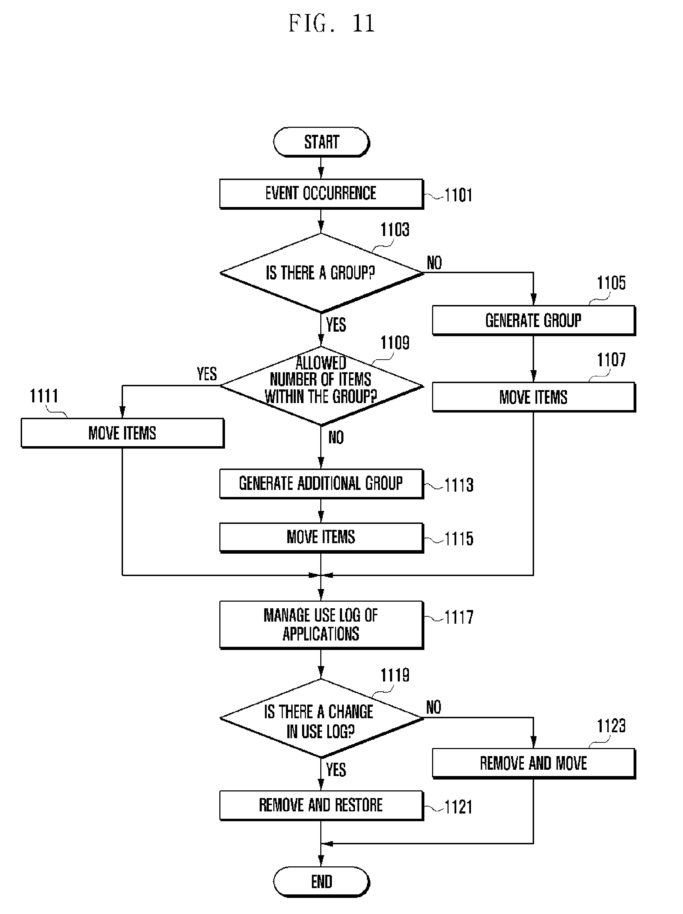

FIG. 11 is a flowchart illustrating a method of operating a menu screen in a user device according to an embodiment of the present invention. In particular, FIG. 11 illustrates an example of an operation method in case an event type is set as a grouping method as considered above.

Referring to FIG. 11, the controller 300 senses an event occurrence for the status change of items within the menu screen in step 1011. For example, the controller 300 senses the status change for items for at least one application item. It is assumed in FIG. 11 that the event is a type of a grouping method as considered above.

Next, when sensing an event occurrence, the controller 300 determines whether there is a previously generated group (e.g., a preliminary garbage group) in step 1103. Further, if there is no previously generated group (NO at step 1103), the controller 300 generates a group based on an item corresponding to the event occurrence in step 1105, and moves the item to the group in step 1107. When generating a group for the item, the controller 300 generates a folder item according thereto, and displays the folder item in the area where the item was placed in the menu screen. In case a plurality of items corresponding to the event occurrence exist, the folder item is generated in the area of the item corresponding to the uppermost line. Further, the controller 300 moves the item to the folder item corresponding to the group, and displays the moved item.

Next, if a previously generated group (YES at step 1103) exists, the controller 300 determines whether the number of items registered in the group is smaller than a predetermined maximum allowed number in step 1109. For example, in case the maximum allowed number is 4, the controller 300 determines whether additional movement of items would be possible because there are less than 4 items in the previous group, or the additional movement of items is impossible because there are 4 items.

Next, if the number of items within the previous group is less than the maximum allowed number (YES at step 1109), the controller 300 moves the items corresponding to the event occurrence to the folder item corresponding to the previous group. Here, in case the number of items within the previous group is less than the maximum allowed number, but the number of items corresponding to the event occurrence is greater than or equal to two, the items are moved by the maximum allowed number within the previous group, and the remaining items are grouped to and managed in a new folder. For example, if it is assumed that the maximum allowed number of items, which can be registered within the group, is 4, the number of items registered in the previous group is 2, and the number of items according to an event occurrence is 3, the two items according to the event occurrence are moved to the previous group, and the remaining one item according to the event occurrence is moved to a newly generated group as described below.

Next, if the number of items within the previous group is the maximum allowed number (NO at step 1109), the controller 300 additionally generates another group based on the items corresponding to the event occurrence (1113), and moves the items to the additionally generated group (1115). Here, when additionally generating a group for the items, the controller 300 generates a folder item according thereto, and displays the folder item in the area where the item has been placed. Further, the controller 300 moves the items to the folder item corresponding to the group, and displays the moved items.

Next, the controller manages the use log of the applications corresponding to the items within the group in step 1117, and determines whether there is a change in the use log in step 1119. For example, the controller 300 determines whether there is an application which is used for a predetermined period of time (e.g., threshold time B as considered above) among applications managed as a group, and whether a change in the use log is a change by a use within a predetermined period of time as above, or a change due to the passage of a predetermined period of time (e.g., threshold time B as considered above).

Next, if there is a change in the use log by a use of an application within a predetermined period of time (YES at step 1119), the controller 300 moves the items corresponding to the application to the menu screen within the group to restore the items in step 1121. For example, the controller 300 moves the items corresponding to the application from the folder item of the group to the menu screen to restore the items, and removes the items from the folder item.

Next, if there is no change in the use log within a predetermined period of time (NO at step 1119), the controller 300 removes the items corresponding to the application from the group, and moves the items to the garbage item 400. For example, the controller moves the items of the application, whose use log has not been updated for a predetermined period of time, from the folder item corresponding to the group to the garbage item 400, and removes the item from the folder item.

In the embodiment of the present invention as considered above, it was illustrated that items for each application are managed with one or more threshold times, but the present invention is not limited to this example. That is, according to the present invention, the criteria relating to the resizing of gradually reducing the items of the menu screen is divided according to the use frequency of the application, and the criteria regarding moving to the garbage area is divided according to the threshold time. For example, the items of the menu screen are gradually differentiated according to use frequency, and when reaching the threshold time, the items are moved to the garbage area and displayed.

Further, in the embodiment of the present invention as considered above, the items displayed on the menu screen for each application have been illustrated. However, the present invention is not limited to this example, and the present invention can also be applied to each item that constitutes a predetermined list. For example, it is possible to check the use log for a message received or transmitted in the message list, to differentiate the displayed items of the message in the message list, and to move the items to a predetermined group provided in the list screen and manage the items. Further, it is possible to check the use log for photographed picture data in the picture list, differentiate the displayed method of the items of the picture data in the picture list, and move the items to a predetermined group provided in the list screen and manage the items. Likewise, the present invention can be utilized in any field that can be implemented for the function control according to the use log of the user device.

The foregoing method for operating a menu screen of a user device of the present invention may be implemented in an executable program command form by various computer means and be recorded in a computer readable recording medium. The computer readable recording medium includes a program command, a data file, and a data structure individually or a combination thereof. The program command recorded in a recording medium may be specially designed or configured for the present invention or be known to a person having ordinary skill in a computer software field to be used.

The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, and a hardware device such as ROM. RAM, flash memory storing and executing program commands. Further, the program command includes a machine language code created by a complier and a high-level language code executable by a computer using an interpreter. The foregoing hardware device may be configured to be operated as at least one software module to perform an operation of the present invention, and vice versa.

As described above, according to a method and apparatus for operating a menu screen of a user device suggested in the present invention, the displayed method of items constituting the menu screen is differentially provided according to a predetermined condition (e.g., a user log by applications, a user position of a user device, the time period of the user device, and the day of the week of the user device, etc.) according to user setting in a user device. For example, the displaying of items of applications unused for a predetermined period of time is differentially provided on a menu screen by analyzing the use log of the application. Further, the position of the user device is analyzed, the items of applications unused at such positions can be temporarily removed from the menu screen, and the menu screen includes only the items of applications used at the position. Further, according to the present invention, the exposure of items to the menu screen is differentially provided or some items are temporarily removed from the menu screen by time periods and days of the week in a user device.

As such, the present invention temporarily removes from the menu screen items of applications that are not frequently used by user, applications that are not used at a predetermined position of the user device, and applications divided by time periods and days of the week of the user device among a number of applications installed in the user device. As such, the displaying of items of the menu screen is simplified according to a predetermined condition such as a use log, a time period and a day of the week, etc. according to user setting, and thus the space utilization of the menu screen is improved.

In particular, according to the present invention, items of application that are not frequently used among applications, are displayed with gradually decreasing size on the menu screen, and the items, which are not used for a predetermined period of time, are moved to a garbage group and be managed, thereby increasing the space utilization of the menu screen. Further, according to the present invention, accessibility and usability for applications intended to be used by user can be improved according to the present invention.

Further, according to the present invention, the applications of items, which are removed from the menu screen, are not permanently removed, and the items are managed as a garbage group in the menu screen. As such, the applications, which belong to the garbage group, are permanently removed or restored in an intuitive manner according to user selection, thereby increasing the efficiency of application management.

Such an invention can be implemented in all types of user devices and various devices corresponding thereto. Further according to the present invention, an optimal environment for managing the applications of the user device and the items of the menu screen according thereto is implemented, thereby improving usability, convenience and competitiveness of the user device.

While the present invention has been shown and described with reference to certain embodiments and drawings of the portable terminal, it will be understood by those skilled in the art that various changes in form and details may be made therein without departing from the spirit and scope of the invention as defined by the appended claims and their equivalents.

## Claims

1. A method for operating a menu screen in a user device, the method comprising:
activating a menu screen in response to a user's request;
determining the use log for each application when the menu screen is activated;
changing a state of an item of the menu screen according to a use log for each corresponding application; and
displaying the menu screen according to the state change of the item.

2. The method of claim 1, wherein changing the state of the item comprises at least one of:
determining a state change of resizing an item size of the corresponding application to a size based on a range of a period of time; and
determining a state change of moving the item of the corresponding application to a garbage area, if the use log for each application is not updated for a predetermined period of time.

3. The method of claim 2, wherein displaying the menu screen according to the state change of the item comprises resizing the size of the determined resized item to a predetermined size and displaying the item.

4. The method of claim 3, wherein displaying the menu screen comprises:
moving the determined moved item to a garbage item; and
substituting an area, from which the item was moved to the garbage item, with a function item and displaying the function item,
wherein the menu screen includes the garbage item corresponding to the garbage area.

5. The method of claim 4, further comprising:
sensing a selection of the function item;
automatically arranging an array of items within the menu screen, or restoring an item corresponding to an area in which the function item has been selected.

6. The method of claim 2, wherein changing the state comprises determining a state change of grouping based on the item of the application, if the use log for each application is not updated for more than a predetermined period of time,
wherein the grouping determined group items is according to a predetermined maximum allowed number of items per group.

7. The method of claim 6, wherein displaying the menu screen comprises:
generating a folder item in the menu screen;
resizing a size of the determined group item according to a predetermined size;
moving the resized item to the folder item; and
displaying the resized item in one group through the folder item.

8. The method of claim 7, further comprising:
determining whether a previous group exists when grouping items;
determining whether the number of items within the previous group corresponds to the maximum allowed number; and
moving the resized items to a newly generated folder item, and displaying the items in another group, if the number of items in the previous group corresponds to the maximum allowed number.

9. The method for claim 1, further comprising:
managing a use log of applications;
determining an occurrence of an event for a state change of items within the menu screen based on the use log of the applications;
changing the state of items for at least one application that generates the event, if an occurrence of the event is sensed; and
managing the state-changed items according to the event type, after changing the state of the item for the application,
wherein determining an occurrence of an event includes checking the use log for each application according to predetermined threshold time.

10. A method for operating a menu screen in a user device, the method comprising:
activating the menu screen in response to a user request;
determining whether there has been an occurrence of an event for changing the state of items within the menu screen according to a predetermined condition, when activating the menu screen;
changing the state of the item for at least one application which generates the event, if the occurrence of the event is sensed;
moving the state-changed item to a garbage area; and
removing the state-changed item from the menu screen.

11. The method of claim 10, wherein determining the occurrence of the event comprises:
collecting the use log for each application when activating the menu screen;
determining whether there is an application not used for a predetermined period of time, based on the collected use logs of the applications; and
determining the occurrence of the event, when there is the application not used.

12. The method of claim 10, wherein determining the occurrence of the event comprises:
checking a current condition of the user device when activating the menu screen;
checking whether there is an application mapped to the current condition; and
determining that the event has occurred when there is the application mapped to the current condition,
wherein the current condition includes at least one of a current position of the user device, a current time period of the user device, and a current day the week of the user device.

13. A user device comprising:
a display unit for displaying a garbage item, displaying items in different ways, and displaying a menu screen;
a storage unit for storing log information including a use log for each application and setting information related to menu screen operation according to the application use log; and
a controller for controlling the display of the menu screen by changing an item state of the menu screen according to the use log for each application, and displaying a menu screen according to a state change of the item when activating the menu screen.

14. The user device of claim 13, wherein the controller manages log information about each application, differentiates the display of the menu screen items according to the application use log and at least one threshold time, manages the item, which has reached the final threshold time, in the menu screen, as a garbage group, and removes the item from an area of the menu screen, and substitutes with the state information.

15. The user device of claim 13, wherein the controller determines whether there has been an occurrence of an event for changing the state of items within the menu screen according to a predetermined condition when activating the menu screen, and
wherein the predetermined condition indicates the occurrence of the event for changing the state of items within the menu screen, based on at least one of use logs of applications, locations of the user device, use time periods of the user device, and use days of the week, of the user device.
